# FASCICULE DE BREVET EUROPEEN

(11) **EP 2 666 605 B1**
(45) Date de publication et mention de la délivrance du brevet: **08.07.2015**
(21) Numéro de dépôt: 13163370.3
(22) Date de dépôt: 11.04.2013
(51) Int. Cl.: B28B 17/00, B29C 31/00, B30B 15/02

(54) **Installation pour la production d'éléments de construction**
Anlage zur Herstellung von Bauelementen
Installation for producing constructional elements

(30) Priorité: 22.05.2012 FR 1254640
(43) Date de publication de la demande: 27.11.2013
(73) Titulaire: Quadra 1, 74130 Contamine Sur Arve (FR)
(72) Inventeur: Ancrenaz, Daniel, 74130 CONTAMINE SUR ARVE (FR); Ancrenaz, Christophe, 74130 CONTAMINE SUR ARVE (FR); Lemaire, Jean Marie, 74130 BONNEVILLE (FR)
(74) Mandataire: Verriest, Philippe

(56) Documents cités:
- DE-U1- 8 606 773
- JP-A- 11 199 013

## Description

La présente invention concerne une installation de production d'éléments de construction.

Une installation de production d'éléments de construction en béton comprend, de façon connue, une presse vibrante destinée à être équipée d'un ensemble de moulage et comprenant des moyens de distribution agencés pour alimenter en béton l'ensemble de moulage.

Une presse vibrante peut être utilisée pour produire des éléments de construction moulés très variés, tels que des blocs, pavés, hourdis, entrevous, dalles, parpaings.

Ainsi, une installation de production comprend généralement plusieurs dizaines d'ensembles de moulage de différentes tailles et de différents formats.

Un ensemble de moulage est formé de deux éléments associés l'un à l'autre, à savoir un moule destiné à recevoir le béton et un pilon destiné à compacter le béton dans le moule et à pénétrer dans ce dernier pour permettre d'en extraire les éléments de construction formés. La masse d'un tel ensemble de moulage peut varier entre 2000 et 4000 kg.

Afin d'assurer un stockage optimal des différents ensembles de moulage, une installation de production d'éléments de construction comprend également un poste de stockage comportant plusieurs rangées superposées de logements de stockage agencés pour stocker chacun un ensemble de moulage.

La mise en place d'un ensemble de moulage dans une presse vibrante s'effectue généralement à l'aide d'un chariot élévateur apte à prélever l'ensemble de moulage du poste de stockage, à transporter l'ensemble de moulage du poste de stockage jusqu'à la presse vibrante, et à charger l'ensemble de moulage dans la presse vibrante. Un tel chariot élévateur est muni d'un support équipé de fourches de levage et déplaçable horizontalement et verticalement par rapport à la cabine du chariot.

Un tel chariot élévateur est rarement équipé de moyens adaptés pour assurer une prise sécurisée de l'ensemble de moulage.

De plus, du fait de la masse élevée de chaque ensemble de moulage, un porte-à-faux important apparait notamment lors du chargement d'un ensemble de moulage dans la presse vibrante ou dans un logement de stockage appartenant à une rangée élevée du poste de chargement, et plus particulièrement lorsque le support est déplacé verticalement et horizontalement à distance de la cabine du chariot. Un tel porte-à-faux entraîne un risque de déséquilibre du chariot élévateur et/ou de rupture de ce dernier.

Ces inconvénients sont d'autant plus préjudiciables que les installations de production existantes nécessitent le plus souvent la présence d'opérateurs à proximité des postes de stockage et des presses vibrantes lors des phases de chargement et de déchargement des ensembles de moulage.

DE 86 06 773 U1 divulge une installation pourvue d'un dispositif de chargement et de déchargement selon le préambule de la revendication 1

La présente invention vise à remédier à ces inconvénients.

Le problème technique à la base de l'invention consiste donc à fournir une installation de production d'éléments de construction comprenant un dispositif de chargement et de déchargement d'ensembles de moulage qui assure un chargement et un déchargement sécurisés et automatisés d'un ensemble de moulage.

A cet effet, la présente invention concerne une installation pour la production d'élément de construction, selon la revendication 1.

La structure du dispositif de chargement et de déchargement selon l'invention, et notamment du portique et du châssis, autorise un déplacement automatisé d'un ensemble de moulage notamment entre le poste de stockage et la presse vibrante. Ces dispositions évitent la présence d'opérateurs auprès de l'installation lors des phases de chargement et déchargement des ensembles de moulage, et donc améliorent la sécurité de ces opérateurs.

En outre, lors du chargement d'un ensemble de moulage notamment dans le poste de stockage ou dans la presse vibrante, cet ensemble de moulage est déplacé horizontalement vers sa position de chargement par les premiers moyens d'entraînement, tout en étant supporté par les moyens de support appartenant au dispositif de chargement et de déchargement qui restent eux fixes en position par rapport au châssis. Ces dispositions permettent de diminuer considérablement le porte-à-faux lors des phases de chargement et de déchargement d'un ensemble de moulage par rapport aux dispositifs de chargement et déchargement de l'art antérieur, et ainsi de diminuer les risques de déséquilibre et de rupture du dispositif de chargement et de déchargement selon l'invention.

Par conséquent, le dispositif de chargement et de déchargement selon l'invention assure des chargements et déchargements sécurisés et automatisés d'un ensemble de moulage.

Selon un mode de réalisation de l'invention, l'installation comporte une pluralité de presses vibrantes, et le dispositif de chargement et de déchargement est agencé pour charger et décharger des ensembles de moulage dans et à partir de chaque presse vibrante.

Selon un mode de réalisation de l'invention, les moyens de support appartenant au dispositif de chargement et de déchargement définissent un plan de support sensiblement horizontal.

De préférence, le dispositif de chargement et de déchargement est agencé pour charger et décharger un ensemble de moulage dans et à partir d'un emplacement de chargement pourvu de moyens de support, et les premiers moyens d'entraînement sont agencés pour entraîner en translation horizontale l'ensemble de moulage par rapport aux moyens de support appartenant au dispositif de chargement et de déchargement entre sa position de transport dans laquelle ledit élément de moulage est supporté par les moyens de support appartenant au dispositif de chargement et de déchargement et sa position de chargement dans laquelle ledit élément de moulage est supporté par les moyens de support appartenant à l'emplacement de chargement.

Avantageusement, les moyens de support appartement au dispositif de chargement et de déchargement sont agencés pour autoriser un déplacement en translation horizontale d'un ensemble de moulage supporté par ces derniers.

Selon un mode de réalisation de l'invention, le portique comporte deux rails de guidage s'étendant sensiblement verticalement, et le châssis comprend deux paires de galets de roulement agencées pour coopérer chacune avec l'un des rails de guidage du portique.

De préférence, les moyens de support appartenant au dispositif de chargement et de déchargement comportent au moins deux éléments de support montés fixes sur le châssis.

Selon un mode de réalisation de l'invention, les moyens de support appartenant au dispositif de chargement et de déchargement comportent des premiers moyens de roulement agencés pour coopérer avec le moule d'un ensemble de moulage lors des déplacements dudit ensemble de moulage entre ses positions de transport et de chargement. Ces dispositions permettent de limiter les frottements lors des déplacements d'un ensemble de moulage entre ses positions de transport et de chargement, et donc de faciliter ces déplacements.

De préférence, les premiers moyens de roulement comportent une pluralité de galets de roulement montés rotatifs chacun sur l'un des éléments de support. Chaque galet de roulement des premiers moyens de roulement est avantageusement monté rotatif autour d'un axe sensiblement horizontal.

Avantageusement, le dispositif de chargement et de déchargement comprend des premiers moyens de guidage agencés pour guider latéralement le moule d'un ensemble de moulage lors des déplacements dudit ensemble de moulage entre ses positions de transport et de chargement.

De préférence, les premiers moyens de guidage comportent deux éléments de guidage latéraux montés fixes sur le châssis, et une pluralité de galets de roulement montés rotatifs sur chaque élément de guidage. Chaque galet de roulement des premiers moyens de guidage est avantageusement monté rotatif autour d'un axe sensiblement vertical.

Selon un mode de réalisation de l'invention, les premiers moyens d'entraînement sont montés sur le châssis.

Selon un mode de réalisation de l'invention, les premiers moyens d'entraînement comportent un chariot monté mobile en translation horizontale sur le châssis entre des première et deuxième positions, le chariot étant agencé pour coopérer avec un ensemble de moulage de telle sorte qu'un déplacement du chariot entre ses première et deuxième positions entraîne un déplacement dudit ensemble de moulage entre ses positions de transport et de chargement.

Selon un mode de réalisation de l'invention, le chariot comprend des moyens d'accrochage montés mobiles entre une position d'accrochage du moule de l'ensemble de moulage dans laquelle le chariot et le moule de l'ensemble de moulage sont solidaires en translation, et une position de libération du moule de l'ensemble de moulage.

Selon un mode de réalisation de l'invention, le chariot comporte un corps de chariot et les moyens d'accrochage comportent au moins un organe d'accrochage monté pivotant sur le corps de chariot. L'au moins un organe d'accrochage est par exemple monté pivotant sur le corps de chariot autour d'un axe de pivotement sensiblement horizontal.

Avantageusement, le chariot comporte des moyens de commande agencés pour commander les pivotements de l'au moins un organe d'accrochage. Les moyens de commande comportent par exemple un vérin de commande. De préférence, l'une des extrémités du vérin de commande est montée articulée sur l'au moins un organe de commande et l'autre extrémité du vérin de commande est montée articulée sur le corps de chariot.

De façon avantageuse, les moyens d'accrochage appartenant au chariot sont agencés pour coopérer avec des moyens d'accrochage complémentaires prévus sur l'ensemble de moulage. Par exemple, les moyens d'accrochage complémentaires comportent au moins un logement d'accrochage, tel qu'une encoche, ménagé sur le moule de l'ensemble de moulage.

Selon un mode de réalisation de l'invention, les premiers moyens d'entraînement comportent un balancier monté pivotant sur le châssis autour d'un axe de pivotement et au moins une bielle montée articulée respectivement sur le balancier et le chariot, le balancier et l'au moins une bielle étant conformés de telle sorte qu'un pivotement du balancier respectivement dans un premier et un deuxième sens de pivotement entraîne respectivement une translation horizontale du chariot vers ses première et deuxième positions.

Selon un mode de réalisation de l'invention, les premiers moyens d'entraînement comportent des moyens de commande agencés pour commander les pivotements du balancier. Les moyens de commande comportent par exemple un vérin de commande. De préférence, l'une des extrémités du vérin de commande est montée articulée sur le balancier et l'autre extrémité du vérin de commande est montée articulée sur le châssis.

Le chariot peut comprendre des deuxièmes moyens de roulement agencés pour coopérer avec des deuxièmes moyens de guidage montés sur le châssis. De préférence, les deuxièmes moyens de guidage comportent deux rails de guidage latéraux montés fixes sur le châssis et s'étendant sensiblement horizontalement. Les deuxièmes moyens de roulement comportent par exemple des galets de roulement.

Selon un mode de réalisation de l'invention, le dispositif de chargement et de déchargement comprend des troisièmes moyens de guidage agencés pour guider le portique durant ses déplacements.

Avantageusement, les troisièmes moyens de guidage comportent un premier rail de guidage destiné à être fixé au sol et un deuxième rail de guidage destiné à être fixé à un plafond, les premier et deuxième rails de guidage définissant le trajet de déplacement du portique.

Selon un mode de réalisation de l'invention, le portique comprend des premiers moyens de roulement motorisés agencés pour rouler sur le sol.

Selon un mode de réalisation de l'invention, le portique comprend des deuxièmes et troisièmes moyens de roulement agencés pour coopérer respectivement avec les premier et deuxième rails de guidage.

Selon un mode de réalisation de l'invention, le châssis est monté mobile en translation verticale sur le portique, et le dispositif de chargement et de déchargement comprend des deuxièmes moyens d'entraînement agencés pour entraîner en translation verticale le châssis par rapport au portique.

Selon un mode de réalisation de l'invention, les deuxièmes moyens d'entraînement comportent des moyens de levage du châssis. Les moyens de levage comprennent par exemple un motoréducteur monté sur une portion supérieure du portique. Les moyens de levage peuvent comporter en outre un arbre d'entraînement relié au motoréducteur et agencé pour entraîner en rotation au moins un pignon agencé pour coopérer avec une chaîne de levage reliée au châssis.

Selon un mode de réalisation de l'invention, la presse vibrante comprend un bâti et des moyens de support montés sur le bâti et agencés pour supporter un ensemble de moulage dans sa position de chargement, la presse vibrante et le dispositif de chargement et de déchargement étant agencés de telle sorte que, durant le chargement ou le déchargement d'un ensemble de moulage dans la presse vibrante, les moyens de support de la presse vibrante et du dispositif de chargement et de déchargement sont disposés à proximité et en regard les uns des autres.

De préférence, durant le chargement ou le déchargement d'un ensemble de moulage dans la presse vibrante, les moyens de support de la presse vibrante et du dispositif de chargement et de déchargement s'étendent sensiblement dans un même plan horizontal.

Selon un mode de réalisation de l'invention, les moyens de support appartenant à la presse vibrante sont montés mobiles en translation horizontale sur le bâti de la presse vibrante entre au moins une position de chargement/déchargement et une position escamotée.

Selon un mode de réalisation de l'invention, chaque logement de stockage du poste de stockage comprend des moyens de support agencés pour supporter un ensemble de moulage dans sa position de chargement, le dispositif de chargement et de déchargement et le poste de stockage étant agencés de telle sorte que, durant le chargement ou le déchargement d'un ensemble de moulage dans un logement de stockage du poste de stockage, les moyens de support appartenant audit logement de stockage et au dispositif de chargement et de déchargement sont disposés à proximité et en regard les uns des autres.

Avantageusement, durant le chargement ou le déchargement d'un ensemble de moulage dans un logement de stockage du poste de stockage, les moyens de support appartenant audit logement de stockage et au dispositif de chargement et de déchargement s'étendent sensiblement dans un même plan horizontal.

Selon l'invention, l'installation comprend un poste de stockage intermédiaire disposé à proximité de la presse vibrante et comprenant au moins deux logements de stockage agencés pour stocker chacun un ensemble de moulage, le dispositif de chargement et de déchargement étant agencé pour charger et décharger un ensemble de moulage dans et à partir de chaque logement de stockage du poste de stockage intermédiaire, de préférence à l'aide des premiers moyens d'entraînement. Ces dispositions permettent de prélever un nouvel ensemble de moulage dans le poste de stockage et de le positionner dans l'un des logements de stockage du poste de stockage intermédiaire en temps masqué. Ainsi, le chargement d'un nouvel ensemble de moulage dans la presse vibrante pourra être réalisé rapidement. Un tel chargement consistera à déposer l'ensemble de moulage présent dans la presse vibrante dans un autre logement de stockage du poste de stockage intermédiaire à l'aide du dispositif de chargement et de déchargement, à prélever le nouvel ensemble de moulage présent dans le poste de stockage intermédiaire et à le charger dans la presse vibrante également à l'aide du dispositif de chargement et de déchargement.

De préférence, chaque logement de stockage du poste de stockage intermédiaire comprend des moyens de support agencés pour supporter un ensemble de moulage dans sa position de chargement, le dispositif de chargement et de déchargement et le poste de chargement intermédiaire étant agencés de telle sorte que, durant le chargement ou le déchargement d'un ensemble de moulage dans un logement de stockage du poste de stockage intermédiaire, les moyens de support appartenant audit logement de stockage et au dispositif de chargement et de déchargement sont disposés à proximité et en regard les uns des autres.

Avantageusement, durant le chargement ou le déchargement d'un ensemble de moulage dans un logement de stockage du poste de stockage intermédiaire, les moyens de support appartenant audit logement de stockage et au dispositif de chargement et de déchargement s'étendent sensiblement dans un même plan horizontal.

De préférence, l'installation comprend une pluralité d'ensembles de moulage.

De toute façon l'invention sera bien comprise à l'aide de la description qui suit en référence au dessin schématique annexé représentant, à titre d'exemple non limitatif, une forme d'exécution de ce dispositif de chargement et de déchargement et de cette installation.
Figure 1 est une vue en perspective avant d'un dispositif de chargement et de déchargement selon l'invention.
Figure 2 est une vue en perspective arrière d'un dispositif de chargement et de déchargement selon l'invention.
Figure 3 est une vue en perspective, à l'échelle agrandie, d'un détail de la figure 1.
Figure 4 est une vue partielle en perspective de dessous du dispositif de chargement et de déchargement de la figure 1.
Figure 5 est une vue partielle de côté du dispositif de chargement et de déchargement de la figure 1.
Figure 6 est une vue partielle avant du dispositif de chargement et de déchargement de la figure 1.
Figure 7 est une vue en perspective d'un chariot du dispositif de chargement et de déchargement de la figure 1.
Figure 8 est une vue en perspective d'un ensemble de moulage comprenant un moule et un pilon.
Figure 9 est une vue schématique de dessus d'une installation de production d'élément de construction selon l'invention.
Figures 10 à 13 sont des vues de côtés d'une presse vibrante et du dispositif de chargement et de déchargement selon l'invention dans différentes étapes de chargement d'un ensemble de moulage.

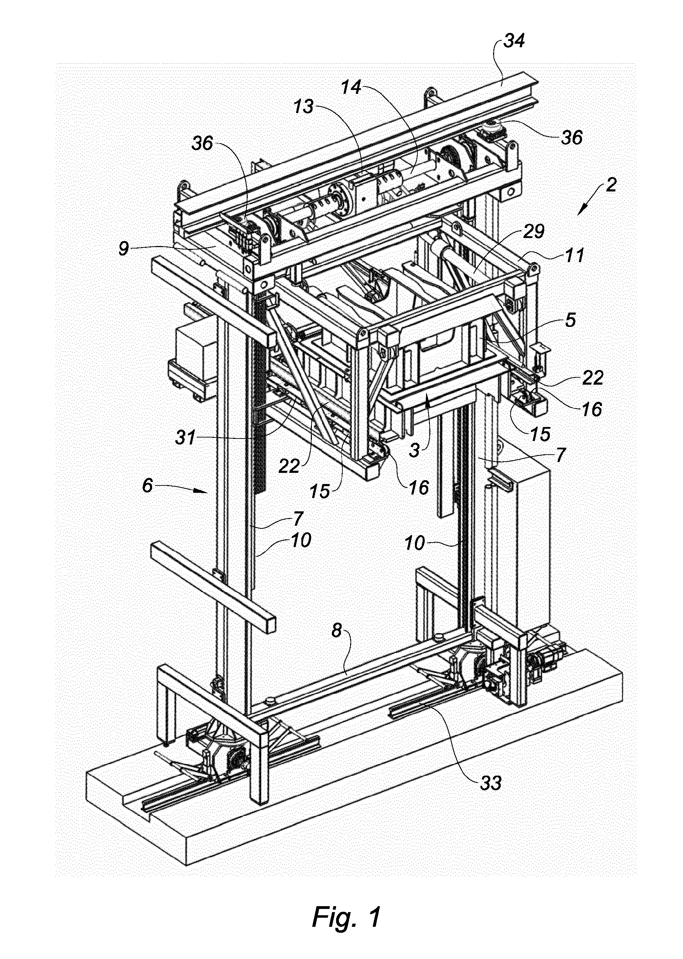

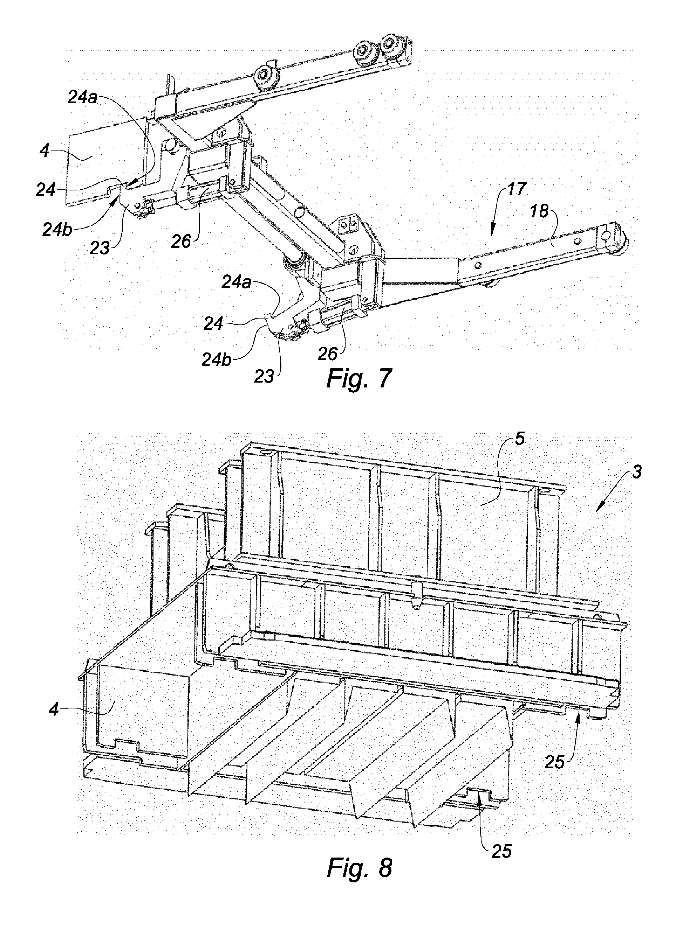

Les figures 1 à 7 représentent un dispositif de chargement et de déchargement 2 d'ensembles de moulage 3 pour la production d'éléments de construction en béton, tels que des blocs, pavés, dalles, bordures, dans et à partir d'un emplacement de chargement. Comme montré sur la figure 8, chaque ensemble de moulage 3 comprend un moule 4 et un pilon 5.

Le dispositif de chargement et de déchargement 2 comporte un portique 6 mobile destiné à être déplacé le long d'un trajet de déplacement, et notamment entre un poste de stockage d'ensembles de moulage 3 et une presse vibrante destiné à être équipée d'un ensemble de moulage.

Le portique 6 comprend deux montant verticaux 7 reliés l'un à l'autre par une traverse inférieure 8 horizontale et un cadre supérieur 9 s'étendant sensiblement horizontalement. Le portique 6 comprend en outre deux rails de guidage 10 en U montés chacun sur l'un des montants 7 et s'étendant sensiblement verticalement.

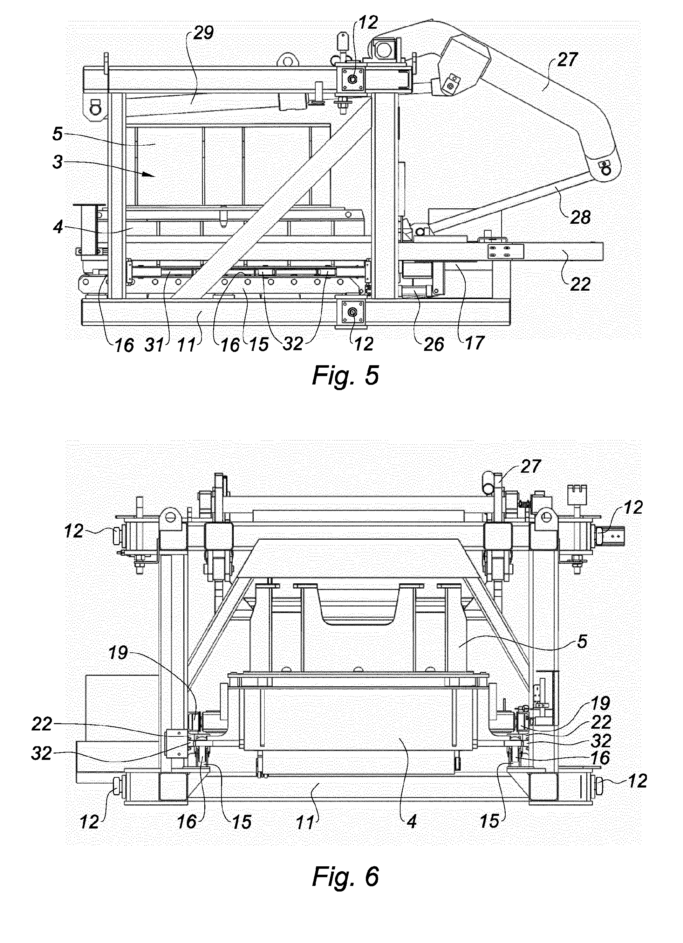

Le dispositif de chargement et de déchargement 2 comporte également un châssis 11 monté mobile en translation verticale sur le portique 6. Comme montré sur les figures 5 et 6, le châssis 11 comprend deux paires de galets de roulement 12 dont chaque galet de roulement 12 est agencé pour coopérer avec l'un des rails de guidage 10 du portique 6 lors des déplacements en translation du châssis 11 par rapport au portique 6. Chaque galet de roulement 12 est monté rotatif autour d'un axe sensiblement horizontal.

Le dispositif de chargement et de déchargement 2 comporte de plus des moyens de levage agencés pour soulever le châssis 11, et donc entraîner en translation verticale ce dernier par rapport au portique 6. Les moyens de levage comportent notamment un motoréducteur 13 monté sur le cadre 9 du portique 6. Les moyens de levage peuvent comporter en outre un arbre d'entraînement 14 relié au motoréducteur 13 et agencé pour entraîner en rotation au moins un pignon agencé pour coopérer avec une chaîne de levage reliée au châssis 11.

Le dispositif de chargement et de déchargement 2 comporte également des moyens de support montés sur le châssis 11 et agencés pour supporter un ensemble de moulage 3. Selon le mode de réalisation représenté sur les figures, les moyens de support comportent deux éléments de support 15 horizontaux espacés l'un de l'autre et montés fixes sur le châssis 11, et une pluralité de galets de roulement 16 agencés pour coopérer avec le moule 4 d'un ensemble de moulage 3. Chaque galet de roulement 16 est monté rotatif sur l'un des éléments de support 15 autour d'un axe sensiblement horizontal.

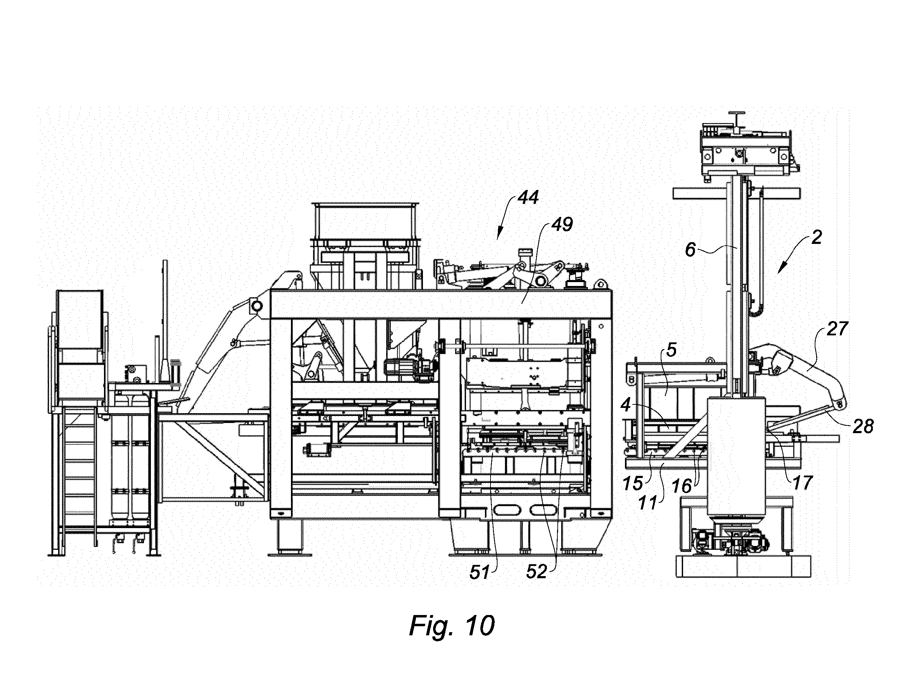

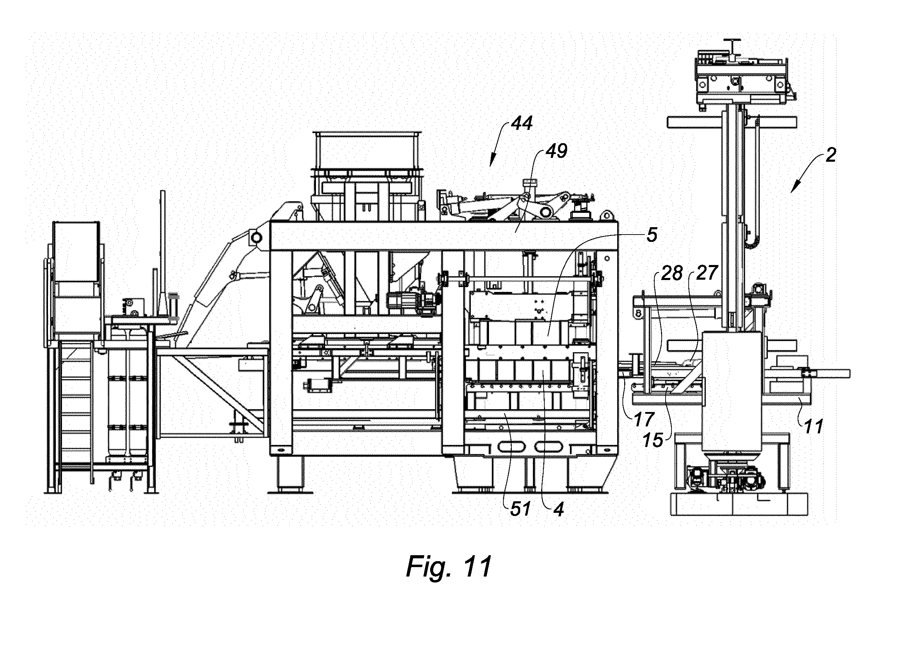

Le dispositif de chargement et de déchargement 2 comporte en outre un chariot 17 monté mobile en translation horizontale sur le châssis 11 entre une première position (représentée aux figures 5 et 10) et une deuxième position (représentée à la figure 11). Le chariot 17 est agencé pour entraîner en translation horizontale un ensemble de moulage 3 par rapport aux éléments de support 15 entre une position de transport (représentée à la figure 5) dans laquelle l'élément de moulage 3 est supporté par les éléments de support 15 et les galets de roulement 16, et une position de chargement dans laquelle l'élément de moulage 3 est disposé dans un emplacement de chargement, et par exemple dans le poste de stockage ou la presse vibrante. Le chariot 17 est agencé de telle sorte qu'un déplacement de ce dernier entre ses première et deuxième positions entraîne un déplacement d'un ensemble de moulage 3 entre ses positions de transport et de chargement.

Comme montré plus particulièrement sur la figure 7, le chariot 17 comporte un corps de chariot 18 présentant une forme général de U et s'étendant sensiblement horizontalement. Le chariot 17 comprend en outre une pluralité de galets de roulement 19 (visibles notamment sur la figure 6). Chaque galet de roulement 19 est monté rotatif sur le corps de chariot 18 autour d'un axe de rotation sensiblement horizontal Le châssis 11 comprend deux rails de guidage 22 latéraux s'étendant sensiblement horizontalement et dans chacun desquels sont reçus plusieurs galets de roulement 19.

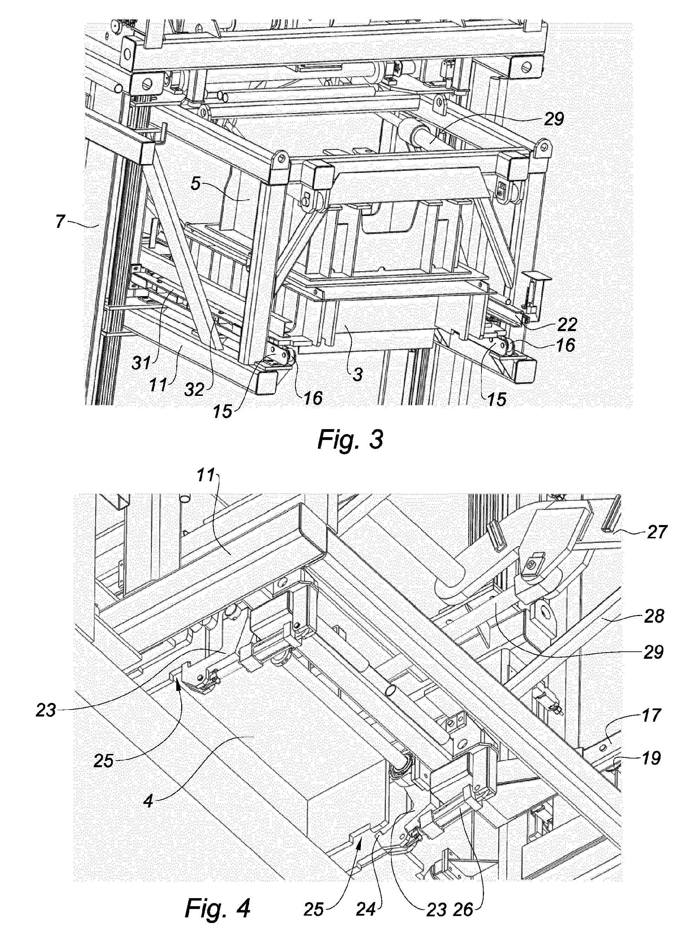

Le chariot 17 comprend deux organes d'accrochage 23 montés pivotant sur le corps de chariot 18 autour d'un axe de pivotement sensiblement horizontal entre une position d'accrochage du moule 4 de l'ensemble de moulage 3 (voir l'organe d'accrochage 23 au premier plan sur la figure 4) dans laquelle le chariot 17 et le moule 4 de l'ensemble de moulage sont solidaires en translation, et une position de libération du moule 4 de l'ensemble de moulage (voir l'organe d'accrochage 23 au deuxième plan sur la figure 4).

Chaque organe d'accrochage 23 comprend un doigt d'accrochage 24 agencé pour coopérer avec un évidement 25 ménagé sur la face inférieure du moule 4. Chaque doigt d'accrochage 24 présente de préférence une face de traction 24a agencée pour coopérer avec une première face délimitant l'évidement 25 correspondant de manière à exercer une traction sur le moule 4 de l'ensemble de moulage afin de le déplacer vers sa position de transport, et une face de poussée 24b agencée pour coopérer avec une deuxième face délimitant l'évidement 25 correspondant de manière à exercer une poussée sur le moule 4 de l'ensemble de moulage afin de le déplacer vers sa position de chargement.

Le chariot 17 comporte notamment deux vérins de commande 26 agencés pour commander les pivotements des organes d'accrochage 23. De préférence, l'une des extrémités de chaque vérin de commande 26 est montée articulée sur l'organe de commande 23 correspondant et l'autre extrémité de chaque vérin de commande 26 est montée articulée sur le corps de chariot 18.

Le dispositif de chargement et de déchargement 2 comporte en outre un balancier 27 monté pivotant sur le châssis 11 autour d'un axe de pivotement horizontal et deux bielles 28 montée articulée respectivement sur le balancier 27 et le corps de chariot 18. Le balancier 27 et les bielles 28 sont conformés de telle sorte qu'un pivotement du balancier 27 respectivement dans un premier et un deuxième sens de pivotement entraîne respectivement une translation horizontale du chariot 17 vers ses première et deuxième positions.

Afin de commander les pivotements du balancier 27, le dispositif de chargement et de déchargement 2 comporte un vérin de commande 29. De préférence, l'une des extrémités du vérin de commande 29 est montée articulée sur le balancier 27 et l'autre extrémité du vérin de commande 29 est montée articulée sur le châssis 11.

Le dispositif de chargement et de déchargement 2 comprend des moyens de guidage agencés pour guider latéralement le moule 4 d'un ensemble de moulage 3 lors des déplacements dudit ensemble de moulage 3 entre ses positions de transport et de chargement. Les moyens de guidage comportent deux éléments de guidage 31 latéraux montés fixes sur le châssis 11, et une pluralité de galets de roulement 32 montés rotatifs sur les éléments de guidage 31. Chaque galet de roulement 32 est avantageusement monté rotatif autour d'un axe sensiblement vertical.

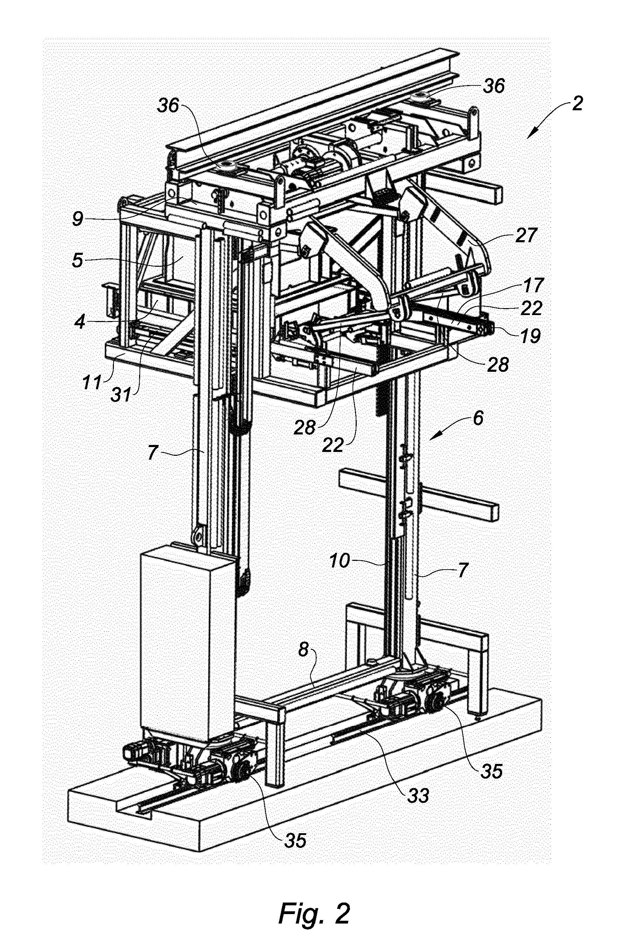

Comme montré sur les figures 1 et 2, le dispositif de chargement et de déchargement 2 comprend également des moyens de guidage agencés pour guider le portique 6 durant ses déplacements. Les moyens de guidage du portique 6 comportent notamment un rail de guidage inférieur 33 destiné à être fixé au sol et un rail de guidage supérieur 34 destiné à être fixé à un plafond, les rails de guidage inférieur et supérieur 33, 34 étant agencés pour définir un trajet de déplacement du portique 6.

Avantageusement, le portique 6 comprend des roues motorisées 35 agencées pour rouler sur le sol, des galets de roulement 36 agencés pour coopérer avec le rail de guidage supérieur 34, et des galets de roulement (non visibles sur les figures) agencés pour coopérer avec le rail de guidage inférieur 33.

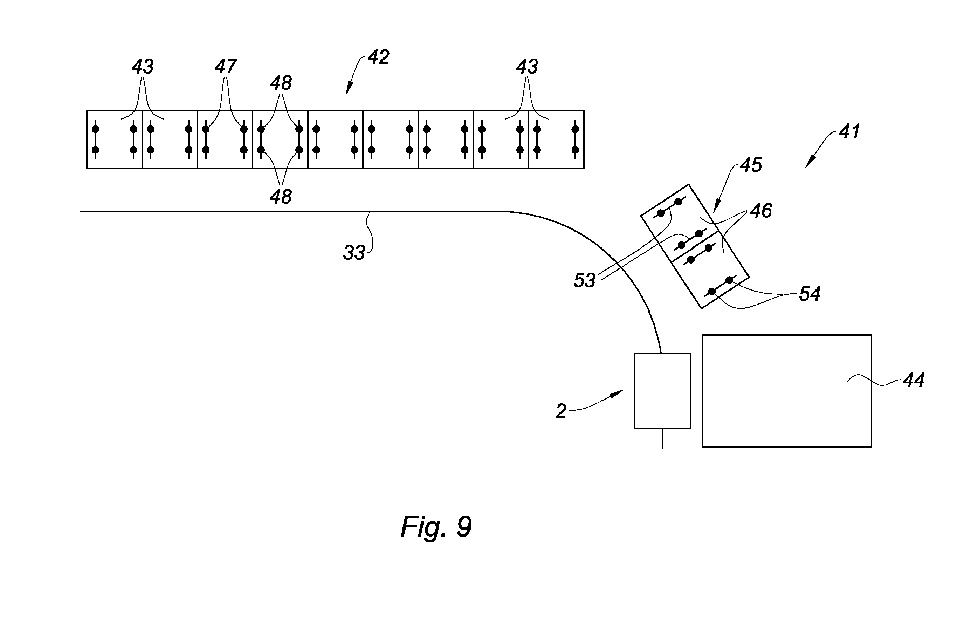

La figure 9 représente une installation 41 pour la production d'éléments de construction en béton.

L'installation 41 comprend notamment :
- un poste de stockage 42 comprenant une pluralité de logements de stockage 43 agencés pour stocker chacun un ensemble de moulage 3,
- un dispositif de chargement et de déchargement 2,
- une presse vibrante 44, et
- un poste de stockage intermédiaire 45 disposé à proximité de la presse vibrante 44 et comprenant une pluralité de logements de stockage 46 agencés pour stocker chacun un ensemble de moulage 3.

Le poste de stockage 42 comprend de préférence plusieurs rangés superposées de logements de stockage 43, et par exemple trois rangés superposées. Chaque logement de stockage 43 comprend des moyens de support agencés pour supporter un ensemble de moulage 3. Les moyens de support appartenant à chaque logement de stockage 43 comportent de préférence deux éléments de support 47 espacés l'un de l'autre et s'étendant dans un même plan horizontal. Chaque élément de support 47 est pourvu de galets de roulement 48 agencés pour coopérer avec le moule 4 d'un ensemble de moulage 3 lors des déplacements de ce dernier entre ses positions de transport et de chargement. Les axes des galets de roulement 48 d'un même logement de stockage 43 s'étendent dans un même plan horizontal.

Le dispositif de chargement et de déchargement 2 est agencé de telle sorte que, durant le chargement ou le déchargement d'un ensemble de moulage 3 dans un logement de stockage 43 du poste de stockage 42, les éléments de support 47 appartenant audit logement de stockage 43 sont disposés à proximité et en regard des éléments de support 15 du dispositif de chargement et de déchargement 2, et que les axes des galets de roulement 16, 48 s'étendent sensiblement dans un même plan horizontal.

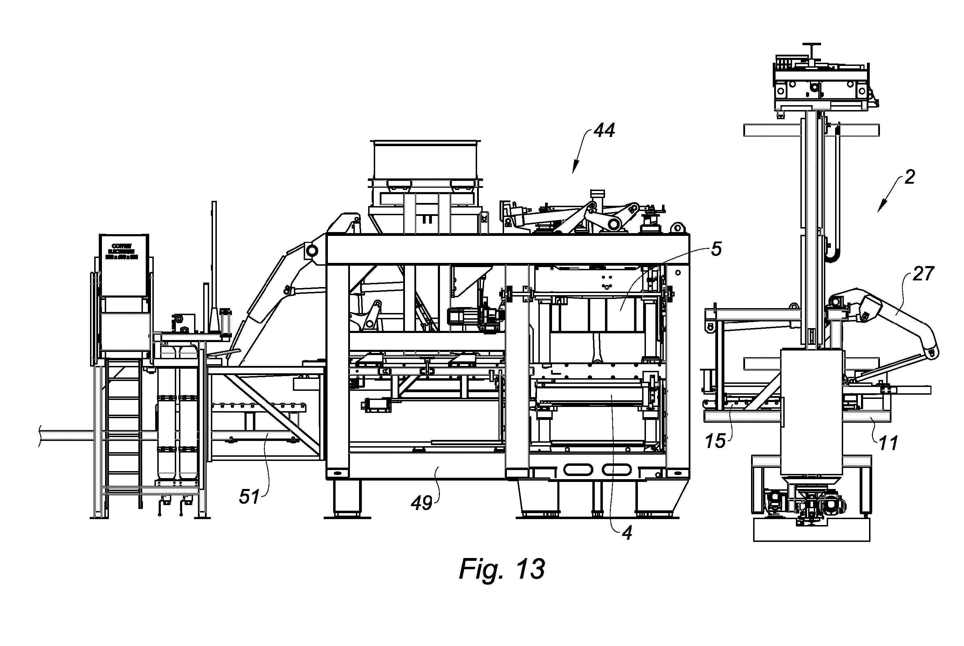

Comme montré sur les figures 10 à 13, la presse vibrante 44 comprend un bâti 49, et des moyens de support montés sur le bâti 49 et agencés pour supporter un ensemble de moulage 3. Les moyens de support appartenant à la presse vibrante 44 comportent de préférence un chariot de support 51 monté mobile en translation horizontale sur le bâti 49 entre une position de chargement/déchargement (représentée sur la figure 10) et une position escamotée (représentée sur la figure 13). Il doit être noté qu'en position de chargement/déchargement, le chariot de support 51 est disposé dans la zone de moulage des éléments de construction, et qu'en position escamotée, le chariot de support 51 est disposé à l'arrière de la presse vibrante 44.

Le chariot de support 51 est pourvu de galets de roulement 52 agencés pour coopérer avec le moule 4 d'un ensemble de moulage 3 lors des déplacements de ce dernier entre ses positions de transport et de chargement. Les axes des galets de roulement 52 s'étendent dans un même plan horizontal.

Comme montré sur les figures 10 à 13, la presse vibrante 44 et le dispositif de chargement et de déchargement 2 sont agencés de telle sorte que, durant le chargement ou le déchargement d'un ensemble de moulage 3 dans la presse vibrante 44, le chariot de support 51 est disposé à proximité et en regard des éléments de support 15 du dispositif de chargement et de déchargement 2, et que les axes des galets de roulement 16, 52 du dispositif de chargement et de déchargement 2 et du chariot de support 51 s'étendent sensiblement dans un même plan horizontal.

Le poste de stockage intermédiaire 45 comprend par exemple deux logements de stockage 46 qui peuvent être disposés l'un à côté de l'autre ou superposés. De préférence, chaque logement de stockage 46 comprend des moyens de support agencés pour supporter un ensemble de moulage 3. Les moyens de support appartenant à chaque logement de stockage 46 comportent de préférence deux éléments de support 53 espacés l'un de l'autre et s'étendant dans un même plan horizontal. Chaque élément de support 53 est pourvu avantageusement de galets de roulement 54 agencés pour coopérer avec le moule 4 d'un ensemble de moulage lors des déplacements de ce dernier entre ses positions de transport et de chargement. Les axes des galets de roulement 54 de chaque logement de stockage 46 s'étendent dans un même plan horizontal.

Le dispositif de chargement et de déchargement 2 et le poste de stockage intermédiaire 45 sont agencés de telle sorte que, durant le chargement ou le déchargement d'un ensemble de moulage 3 dans un logement de stockage 46 du poste de stockage intermédiaire 45, les éléments de support 53 appartenant audit logement de stockage 46 sont disposés à proximité et en regard des éléments de support 15 du dispositif de chargement et de déchargement 2, et que les axes des galets de roulement 16, 54 s'étendent sensiblement dans un même plan horizontal.

Un procédé de chargement d'un ensemble de moulage 3 dans la presse vibrante 44 va maintenant être décrit en référence aux figures 10 à 13 en considérant notamment que la presse vibrante 44 n'est équipée initialement d'aucun ensemble de moulage.

Le procédé de chargement comprend une première phase de chargement représentée sur la figure 10 et comprenant les étapes suivantes consistant à :
- déplacer le portique 6 du dispositif de chargement et de déchargement 2 en regard de la presse vibrante 44,
- déplacer le chariot de support 51 dans sa position de chargement, et
- déplacer verticalement le châssis 11 du dispositif de chargement et de déchargement 2 de telle sorte que les galets de roulement 16, 52 du dispositif de chargement et de déchargement 2 et du chariot de support 51 s'étendent sensiblement dans un même plan horizontal.

Le procédé de chargement comprend une deuxième phase de chargement représentée sur la figure 11 et comprenant notamment l'étape suivante consistant à déplacer le chariot 17 du dispositif de chargement et de déchargement 2 dans sa deuxième position à l'aide du balancier 27 et des bielles 28, de manière à déplacer en translation horizontale l'ensemble de moulage 3 vers sa position de chargement dans laquelle l'ensemble de moulage 3 est supporté par le chariot de support 51.

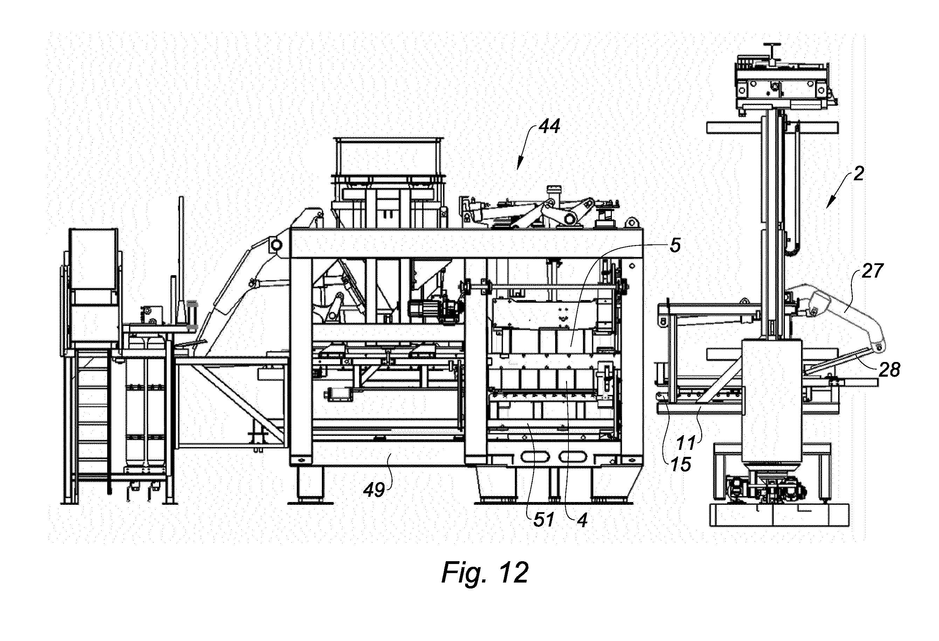

Le procédé de chargement comprend une troisième phase de chargement représentée sur la figure 12 et comprenant notamment l'étape suivante consistant à déplacer le chariot 17 du dispositif de chargement et de déchargement 2 dans sa première position à l'aide du balancier 27 et des bielles 28.

Le procédé de chargement comprend une quatrième phase de chargement représentée sur la figure 13 et comprenant notamment l'étape suivante consistant à déplacer le chariot de support 51 dans sa position escamotée.

Comme il va de soi, l'invention ne se limite pas à la seule forme d'exécution de ce dispositif de chargement et de déchargement et de cette installation, décrite ci-dessus à titre d'exemple, elle en embrasse au contraire toutes les variantes de réalisation.

## Revendications

1. Installation (41) pour la production d'éléments de construction, comprenant :
- un dispositif de chargement et de déchargement (2) d'ensembles de moulage (3) pour la production d'éléments de construction dans et à partir d'une pluralité d'emplacements de chargement, chaque ensemble de moulage (3) comprenant un moule (4) et un pilon (5), le dispositif de chargement et de déchargement comprenant :
- un portique (6) mobile destiné à être déplacé le long d'un trajet de déplacement,
- un châssis (11) monté sur le portique (6),
- des moyens de support (15, 16) agencés pour supporter un ensemble de moulage (3), les moyens de support étant montés fixes en position par rapport au châssis (11), et
- des premiers moyens d'entraînement (17, 27, 28) agencés pour entraîner en translation horizontale un ensemble de moulage (3) par rapport aux moyens de support (15, 16) entre une position de transport dans laquelle ledit élément de moulage (3) est supporté par les moyens de support (15, 16) et une position de chargement dans laquelle ledit élément de moulage (3) est disposé dans un emplacement de chargement,
- un poste de stockage (42) comprenant une pluralité de logements de stockage (43) agencés pour stocker chacun un ensemble de moulage (3),
- une presse vibrante (44), et
- un poste de stockage intermédiaire (45) disposé à proximité de la presse vibrante (44) et comprenant au moins deux logements de stockage (46) agencés pour stocker chacun un ensemble de moulage (3), le dispositif de chargement et de déchargement (2) étant agencé pour charger et décharger un ensemble de moulage (3) dans et à partir de chaque logement de stockage (46) du poste de stockage intermédiaire (45),
**caractérisée en ce que**
la pluralité d'emplacements de chargement comporte les logements de stockage du poste de stockage (42) et du poste de stockage intermédiaire (45) et un emplacement prévu dans la presse vibrante (44) de telle sorte que le dispositif de chargement et de déchargement (2) est agencé pour charger et décharger des ensembles de moulage dans et à partir du poste de stockage (42), dans et à partir du poste de stockage intermédiaire (45) et dans et à partir de la presse vibrante (44).

2. Installation (41) selon la revendication 1, dans laquelle les moyens de support (15, 16) appartenant au dispositif de chargement et de déchargement (2) comportent des premiers moyens de roulement (16) agencés pour coopérer avec le moule (4) d'un ensemble de moulage (3) lors des déplacements dudit ensemble de moulage (3) entre ses positions de transport et de chargement.

3. Installation (41) selon la revendication 1 ou 2, dans laquelle le dispositif de chargement et de déchargement (2) comprend des premiers moyens de guidage (31, 32) agencés pour guider latéralement le moule (4) d'un ensemble de moulage (3) lors des déplacements dudit ensemble de moulage (3) entre ses positions de transport et de chargement.

4. Installation (41) selon l'une des revendications 1 à 3, dans laquelle les premiers moyens d'entraînement comportent un chariot (17) monté mobile en translation horizontale sur le châssis (11) entre des première et deuxième positions, le chariot (17) étant agencé pour coopérer avec un ensemble de moulage (3) de telle sorte qu'un déplacement du chariot (17) entre ses première et deuxième positions entraîne un déplacement dudit ensemble de moulage (3) entre ses positions de transport et de chargement.

5. Installation (41) selon la revendication 4, dans laquelle le chariot (17) comprend des moyens d'accrochage (23) montés mobiles entre une position d'accrochage du moule (4) de l'ensemble de moulage dans laquelle le chariot (17) et le moule de l'ensemble de moulage sont solidaires en translation, et une position de libération du moule (4) de l'ensemble de moulage.

6. Installation (41) selon la revendication 4 ou 5, dans laquelle les premiers moyens d'entraînement comportent un balancier (27) monté pivotant sur le châssis (11) autour d'un axe de pivotement et au moins une bielle (28) montée articulée respectivement sur le balancier (27) et le chariot (17), le balancier (27) et l'au moins une bielle (28) étant conformés de telle sorte qu'un pivotement du balancier respectivement dans un premier et un deuxième sens de pivotement entraîne respectivement une translation horizontale du chariot (17) vers ses première et deuxième positions.

7. Installation (41) selon l'une des revendications 4 à 6, dans laquelle le chariot (17) comprend des deuxièmes moyens de roulement (19) agencés pour coopérer avec des deuxièmes moyens de guidage (22) montés sur le châssis (11).

8. Installation (41) selon l'une des revendications 1 à 7, dans laquelle le dispositif de chargement et de déchargement (2) comprend des troisièmes moyens de guidage (33, 34) agencés pour guider le portique (6) durant ses déplacements.

9. Installation (41) selon l'une des revendications 1 à 8, dans laquelle le châssis (11) est monté mobile en translation verticale sur le portique (6), et dans laquelle le dispositif de chargement et de déchargement comprend des deuxièmes moyens d'entraînement agencés pour entraîner en translation verticale le châssis (11) par rapport au portique (6).

10. Installation (41) selon l'une des revendications 1 à 9, dans laquelle la presse vibrante (44) comprend un bâti (49) et des moyens de support (51, 52) montés sur le bâti (49) et agencés pour supporter un ensemble de moulage (3) dans sa position de chargement, la presse vibrante (44) et le dispositif de chargement et de déchargement (2) étant agencés de telle sorte que, durant le chargement ou le déchargement d'un ensemble de moulage (3) dans la presse vibrante (44), les moyens de support de la presse vibrante (44) et du dispositif de chargement et de déchargement (2) sont disposés à proximité et en regard les uns des autres.

11. Installation (41) selon la revendication 10, dans laquelle les moyens de support (51, 52) appartenant à la presse vibrante (44) sont montés mobiles en translation horizontale sur le bâti (49) de la presse vibrante entre au moins une position de chargement/déchargement et une position escamotée.

12. Installation (41) selon l'une des revendications 1 à 11, dans laquelle chaque logement de stockage (43) du poste de stockage (42) comprend des moyens de support (47, 48) agencés pour supporter un ensemble de moulage (3) dans sa position de chargement, le dispositif de chargement et de déchargement (2) et le poste de stockage (42) étant agencés de telle sorte que, durant le chargement ou le déchargement d'un ensemble de moulage (3) dans un logement de stockage (43) du poste de stockage (42), les moyens de support appartenant audit logement de stockage et au dispositif de chargement et de déchargement sont disposés à proximité et en regard les uns des autres.

## Patentansprüche

1. Anlage (41) zur Produktion von Bauelementen, die Folgendes umfasst:
- eine Lade- und Entladevorrichtung (2) von Formbaugruppen (3) für die Herstellung von Bauelementen in und ausgehend von einer Mehrzahl von Ladestellen, wobei jede Formbaugruppe (3) eine Form (4) und einen Stößel (5) umfasst, wobei die Lade- und Entladevorrichtung Folgendes umfasst:
- ein bewegliches Portal (6), das dazu bestimmt ist, entlang eines Bewegungsverlaufs verlagert zu werden,
- ein Chassis (11), das auf das Portal (6) montiert ist,
- Tragmittel (15, 16), die angeordnet sind, um eine Formbaugruppe (3) zu tragen, wobei die Tragmittel stationär in Position in Bezug auf das Chassis (11) montiert sind, und
- erste Antriebsmittel (17, 27, 28), die angeordnet sind, um eine Formbaugruppe (3) in horizontaler Verschiebung in Bezug auf die Tragmittel (15, 16) zwischen einer Transportposition, in der das Formelement (3) von den Tragmitteln (15, 16) getragen wird, und einer Ladeposition, in der das Formelement (3) in einer Lagergestelle angeordnet ist, anzutreiben,
- einen Lagerposten (42), der eine Mehrzahl von Lageraufnahmen (43) umfasst, die eingerichtet ist, um jeweils eine Formbaugruppe (3) zu lagern,
- eine Rüttelpresse (44), und
- einen Zwischenlagerposten (45), der in der Nähe der Rüttelpresse (44) angeordnet ist und mindestens zwei Lageraufnahmen (46) umfasst, die eingerichtet sind, um jeweils eine Formbaugruppe (3) zu lagern, wobei die Lade- und Entladevorrichtung (2) angeordnet ist, um eine Formbaugruppe (3) in und ausgehend von jeder Lageraufnahme (46) des Zwischenlagerpostens (45) zu laden und zu entladen,
**dadurch gekennzeichnet, dass** die Mehrzahl von Ladestellen die Lageraufnahme des Lagepostens (42) und des Zwischenlagerpostens (45) und eine in der Rüttelpresse (44) vorgesehene Stelle derart aufweist, dass die Lade- und Entladevorrichtung (2) angeordnet ist, um Formbaugruppen in und ausgehend von dem Lagerposten (42), in und ausgehend von dem Zwischenlagerposten (45) sowie in und ausgehend von der Rüttelpresse (44) zu laden und zu entladen.

2. Anlage (41) nach Anspruch 1, bei der die Tragmittel (15, 16), die zu der Lade- und Entladevorrichtung (2) gehören, erste Rollmittel (16) umfassen, die angeordnet sind, um mit der Form (4) einer Formbaugruppe (3) bei Bewegungen der Formbaugruppe (3) zwischen ihrer Transport- und Ladeposition zusammenzuwirken.

3. Anlage (41) nach Anspruch 1 oder 2, bei der die Lade- und Entladevorrichtung (2) erste Führungsmittel (31, 32) umfasst, die angeordnet sind, um die Form (4) einer Formbaugruppe (3) bei Bewegungen der Formbaugruppe (3) zwischen ihrer Transport- und Ladeposition zu führen.

4. Anlage (41) nach einem der Ansprüche 1 bis 3, bei der die ersten Antriebsmittel einen Wagen (17) umfassen, der in horizontaler Verschiebung beweglich auf dem Chassis (11) zwischen einer ersten und einer zweiten Position montiert ist, wobei der Wagen (17) angeordnet ist, um mit einer Formbaugruppe (3) derart zusammenwirken, dass eine Bewegung des Wagens (17) zwischen seiner ersten und zweiten Position eine Bewegung der Formbaugruppe (3) zwischen ihrer Transport- und Ladeposition nach sich zieht.

5. Anlage (41) nach Anspruch 4, bei der der Wagen (17) Anhängmittel (23) umfasst, die zwischen einer Anhängposition der Form (4) der Formbaugruppe, in der der Wagen (17) und die Form der Formbaugruppe fest in Verschiebung verbunden sind, und einer Freigabeposition der Form (4) der Formbaugruppe beweglich montiert sind.

6. Anlage (41) nach Anspruch 4 oder 5, bei der die ersten Antriebsmittel einen Schwinghebel (27) umfassen, der auf dem Chassis (11) um eine Schwenkachse schwenkend montiert ist, und mindestens ein Pleuel (28), das jeweils auf dem Schwinghebel (27) und dem Wagen (17) angelenkt montiert ist, wobei der Schwinghebel (27) und das mindestens eine Pleuel (28) derart ausgebildet sind, dass ein Schwenken des Schwinghebels jeweils in eine erste und eine zweite Schwenkrichtung jeweils eine horizontale Verschiebung des Wagens (17) zu seiner ersten und zweiten Position nach sich zieht.

7. Anlage (41) nach einem der Ansprüche 4 bis 6, bei der der Wagen (17) zweite Rollmittel (19) umfasst, die angeordnet sind, um mit zweiten Führungsmitteln (22), die auf das Chassis (11) montiert sind, zusammenzuwirken.

8. Anlage (41) nach einem der Ansprüche 1 bis 7, bei der die Lade- und Entladevorrichtung (2) dritte Führungsmittel (33, 34) umfasst, die angeordnet sind, um das Portal (6) während seiner Bewegungen zu führen.

9. Anlage (41) nach einem der Ansprüche 1 bis 8, bei der das Chassis (11) in vertikaler Verschiebung auf dem Portal (6) beweglich montiert ist, und bei der die Lade- und Entladevorrichtung zweite Antriebsmittel umfasst, die angeordnet sind, um das Chassis (11) in Bezug auf das Portal (6) in vertikaler Verschiebung anzutreiben.

10. Anlage (41) nach einem der Ansprüche 1 bis 9, bei der die Rüttelpresse (44) einen Rahmen (49) und Tragmittel (51, 52) umfasst, die auf den Rahmen (49) montiert und angeordnet sind, um eine Formbaugruppe (3) in ihrer Ladeposition zu tragen, wobei die Rüttelpresse (44) und die Lade- und Entladevorrichtung (2) derart angeordnet sind, dass die Tragmittel der Rüttelpresse (44) und der Lade- und Entladevorrichtung (2) während des Ladens oder Entladens einer Formbaugruppe (3) in der Rüttelpresse (44) in der Nähe und einander gegenüber angeordnet sind.

11. Anlage (41) nach Anspruch 10, bei der die Tragmittel (51, 52), die zu der Rüttelpresse (44) gehören, in horizontaler Verschiebung auf dem Rahmen (49) der Rüttelpresse zwischen einer Lade-/Entladeposition und/oder einer eingezogenen Position beweglich montiert sind.

12. Anlage (41) nach einem der Ansprüche 1 bis 11, bei der jede Lageraufnahme (43) des Lagerpostens (42) Tragmittel (47, 48) umfasst, die eingerichtet sind, um eine Formbaugruppe (3) in ihrer Ladeposition zu tragen, wobei die Lade- und Entladevorrichtung (2) und der Lagerposten (42) derart angeordnet sind, dass die Tragmittel, die zu der Lageraufnahme und zu der Lade- und Entladevorrichtung gehören, während des Ladens oder Entladens einer Formbaugruppe (3) in eine Lageraufnahme (43) des Lagerpostens (42) in der Nähe und einander gegenüber angeordnet sind.

## Claims

1. An installation (41) for producing construction elements, comprising :
- a device (2) for loading and unloading molding assemblies (3) for the production of construction elements in and from a plurality of loading locations, each molding assembly (3) comprising a mold (4) and a pestle (5), the loading and unloading device comprising :
- a movable gantry (6) intended to be displaced along a displacement path,
- a chassis (11) mounted on the gantry (6),
- support means (15, 16) arranged to support a molding assembly (3), the support means being mounted in fixed position relative to the chassis (11), and
- first driving means (17, 27, 28) arranged to drive a molding assembly (3) in horizontal translation relative to the support means (15, 16) between a transport position wherein said molding element (3) is supported by the support means (15, 16) and a loading position wherein said molding element (3) is disposed in a loading location,
- a storage station (42) comprising a plurality of storage housings (43) each arranged to store a molding assembly (3),
- a vibrating press (44), and
- an intermediate storage station (45) disposed proximate to the vibrating press (44) and comprising at least two storage housings (46) each arranged to store a molding assembly (3), the loading and unloading device (2) being arranged to load and unload a molding assembly (3) in and from each storage housing (46) of the intermediate storage station (45),
**characterized in that** the plurality of loading locations includes the storage housings of the storage station (42) and of the intermediate storage station (45) and a location provided in the vibrating press (44) so that the loading and unloading device (2) is arranged to load and unload molding assemblies in and from the storage station (42), in and from the intermediate storage station (45) and in and from the vibrating press (44).

2. The installation (41) according to claim 1, wherein the support means (15, 16) belonging to the loading and unloading device (2) include first rolling means (16) arranged to cooperate with the mold (4) of a molding assembly (3) during the displacements of said molding assembly (3) between its transport and loading positions.

3. The installation (41) according to claim 1 or 2, wherein the loading and unloading device (2) comprises first guide means (31, 32) arranged to laterally guide the mold (4) of a molding assembly (3) during the displacements of said molding assembly (3) between its transport and loading positions.

4. The installation (41) according to any of claims 1 to 3, wherein the first driving means include a carriage (17) movably mounted in horizontal translation on the chassis (11) between first and second positions, the carriage (17) being arranged to cooperate with a molding assembly (3) so that a displacement of the carriage (17) between its first and second positions results in a displacement of said molding assembly (3) between its transport and loading positions.

5. The installation (41) according to claim 4, wherein the carriage (17) comprises hooking means (23) movably mounted between a hooking position of the mold (4) of the molding assembly wherein the carriage (17) and the mold of the molding assembly are secured in translation, and a release position of the mold (4) of the molding assembly.

6. The installation (41) according to claim 4 or 5, wherein the first driving means include a rocker arm (27) pivotally mounted on the chassis (11) about a pivot axis and at least one connecting rod (28) mounted in an articulated manner respectively on the rocker arm (27) and the carriage (17), the rocker arm (27) and the at least one connecting rod (28) being shaped so that a pivoting of the rocker arm respectively in a first and a second pivot directions results respectively in a horizontal translation of the carriage (17) toward its first and second positions.

7. The installation (41) according to any of claims 4 to 6, wherein the carriage (17) comprises second rolling means (19) arranged to cooperate with second guide means (22) mounted on the chassis (11).

8. The installation (41) according to any of claims 1 to 7, wherein the loading and unloading device (2) comprises third guide means (33, 34) arranged to guide the gantry (6) during its displacements.

9. The installation (41) according to any of claims 1 to 8, wherein the chassis (11) is movably mounted in vertical translation on the gantry (6), and wherein the loading and unloading device comprises second driving means arranged to drive the chassis (11) in vertical translation relative to the gantry (6).

10. The installation (41) according to any of claims 1 to 9, wherein the vibrating press (44) comprises a frame (49) and support means (51, 52) mounted on the frame (49) and arranged to support a molding assembly (3) in its loading position, the vibrating press (44) and the loading and unloading device (2) being arranged so that, during the loading or unloading of a molding assembly (3) in the vibrating press (44), the support means of the vibrating press (44) and of the loading and unloading device (2) are disposed proximate and opposite to each other.

11. The installation (41) according to claim 10, wherein the support means (51, 52) belonging to the vibrating press (44) are movably mounted in horizontal translation on the frame (49) of the vibrating press between at least one loading/unloading position and one retracted position.

12. The installation (41) according to any of claims 1 to 11, wherein each storage housing (43) of the storage station (42) comprises support means (47, 48) arranged to support a molding assembly (3) in its loading position, the loading and unloading device (2) and the storage station (42) being arranged so that, during the loading or unloading of a molding assembly (3) in a storage housing (43) of the storage station (42), the support means belonging to said storage housing and to the loading and unloading device are disposed proximate and opposite to each other.
